**Europäisches Patentamt**

(19) **European Patent Office**

**Office européen des brevets**

(11) Numéro de publication: **0 086 540**
**A1**

## (12) DEMANDE DE BREVET EUROPEEN

(21) Numéro de dépôt: **83200215.8**

(22) Date de dépôt: **10.02.83**

(51) Int. Cl.³: **B 23 K 26/04**

(30) Priorité: **17.02.82 BE 6047607**

(43) Date de publication de la demande: **24.08.83**
**Bulletin 83/34**

(84) Etats contractants désignés: **DE FR GB IT SE**

(71) Demandeur: **Centre de Recherches Metallurgiques Centrum voor research in de metallurgie Association sans but lucratif, Vereniging zonder winstoogmerk Abbaye du Val-Benoît 11, rue Ernest Solvay, B-4000 Liège (BE)**

(72) Inventeur: **Crahay, Jean René, Ster 334, B-4878 Francorchamps (BE)**

(74) Mandataire: **Lacasse, Lucien Emile, CENTRE DE RECHERCHES METALLURGIQUES Abbaye du Val-Benoît 11, rue Ernest Solvay, B-4000 Liège (BE)**

(54) Procédé de réglage d'un traitement superficiel par faisceau laser.

(57) Procédé de réglage d'un traitement de surface au moyen d'un faisceau laser focalisé, consistant à déterminer la distance théorique entre la surface de la pièce à traiter et un point quelconque de l'élément focalisateur du faisceau, cette distance étant appelée distance de consigne, à mesurer la distance réelle entre la surface et ce point de l'élément focalisateur, à déterminer l'écart entre la distance de consigne et la distance réelle mesurée, et à déplacer l'élément focalisateur, de façon à annuler l'écart constaté entre la distance réelle mesurée et la distance de consigne.

EP 0 086 540 A1

- 1 -

C 2176/8302.

CENTRE DE RECHERCHES METALLURGIQUES –
CENTRUM VOOR RESEARCH IN DE METALLURGIE,
Association sans but lucratif –
Vereniging zonder winstoogmerk
à BRUXELLES, (Belgique).

**<u>Procédé de réglage d'un traitement superficiel par faisceau
laser</u>.**

La présente invention est relative à un procédé de réglage de
la position du plan de focalisation, dans un traitement de
pièces au moyen d'un faisceau laser focalisé.

On connaît de nombreuses opérations, en particulier en construction mécanique, dans lesquelles l'outil peut être remplacé par un faisceau laser focalisé. A titre d'exemple, on peut
citer diverses opérations d'usinage, comme le découpage ou le
perçage, d'assemblage, comme le soudage, ou de traitement
thermique superficiel.

Dans toutes ces opérations, le faisceau laser est focalisé par
un système optique approprié, par exemple une lentille ou un
miroir courbe; il forme ainsi un cône de focalisation dont le
sommet, situé dans le plan focal du système optique utilisé,
présente la densité maximum de puissance lumineuse du faisceau.

Pour des raisons d'économie d'énergie d'une part, et de précision de l'opération d'autre part, il convient que ce point de puissance maximum soit positionné de façon aussi précise que possible, par rapport à la pièce traitée; par exemple, dans le cas d'un traitement de surface le point focal est d'habitude amené dans le plan tangent à la surface de la pièce, au point où l'on doit exécuter l'opération envisagée.

S'il est important que ce point soit correctement positionné par rapport à la pièce à traiter, il importe également que cette position relative reste aussi constante que possible. Cette condition est d'autant plus difficile à réaliser que les pièces peuvent être en mouvement ou présentent parfois des surfaces assez irrégulières. Elle est cependant indispensable pour garantir un traitement régulier et reproductible des pièces. La constance de cette position relative est d'autant plus critique que la distance focale du système optique est plus courte, c'est-à-dire que l'angle d'ouverture du cône de focalisation est plus élevé.

A titre d'exemple, un faisceau laser parallèle d'un diamètre de 20 mm et d'une longueur d'onde de 10,6 $\mu$m, focalisé par une lentille dont la distance focale est de 60 mm, présente au foyer un diamètre de 0,1 mm, avec une profondeur de champ de 0,03 mm.

On connaît généralement la position du foyer d'un système optique par rapport à l'élément actif de ce système, par exemple une lentille.

Pour maintenir ce foyer dans le plan de la surface de la pièce, il faut donc assurer et maintenir une distance constante entre le plan de la surface de la pièce et un point quelconque de l'élément actif du système optique. Dans le cas d'une lentille, ce point peut être en particulier le point de percée de l'axe du faisceau laser dans le plan médian de la lentille.

La présente invention a pour objet un procédé destiné à maintenir constante la distance entre la surface d'une pièce à traiter et un élément optique assurant la focalisation d'un faisceau laser.

Elle a également pour objet un procédé permettant de ramener automatiquement cette distance à la valeur constante désirée, lorsqu'elle s'en écarte.

Le procédé de réglage d'un traitement de surface au moyen d'un faisceau laser focalisé, qui fait l'objet de la présente invention, est essentiellement caractérisé en ce que l'on détermine la distance entre la surface de la pièce et un point quelconque de l'élément focalisateur pour laquelle le sommet du cône de focalisation dudit faisceau est situé dans le plan de la surface de la pièce au point où le dit traitement doit être appliqué, cette distance étant désignée par l'expression distance de consigne, on mesure la distance réelle entre la dite surface et le dit point de l'élément focalisateur, on détermine l'écart entre la dite valeur de consigne et la dite valeur réelle mesurée, et on déplace l'élément focalisateur de façon à annuler l'écart constaté entre la valeur de consigne et la valeur mesurée de la dite distance.

D'une façon particulièrement intéressante, on mesure par voie électrique, électromagnétique, optique, la valeur réelle de la dite distance, on produit un signal électrique, représentatif de l'écart constaté par rapport à la dite valeur de consigne et on applique ce signal électrique à un organe de commande du déplacement de l'élément focalisateur.

Selon l'invention, il a été trouvé particulièrement intéressant de déterminer la variation de l'écart entre la valeur réelle de la dite distance et sa valeur de consigne, en mesurant les variations d'une grandeur physique, en particulier électrique, électromagnétique ou optique, par rapport à une valeur de référence de la dite grandeur physique, représentative d'un écart nul.

Il va de soi que l'invention n'est pas limitée aux modes de réalisation qui viennent d'être mentionnés, mais qu'elle couvre également tout moyen équivalent permettant de mettre en oeuvre les procédés décrits dans les revendications qui suivent.

Liège, le 7 février 1983.

LACASSE L.E.,

## Revendications de brevet.

1. Procédé de réglage d'un traitement de surface au moyen d'un faisceau laser focalisé, caractérisé en ce que l'on détermine la distance entre la surface de la pièce à traiter et un point quelconque de l'élément focalisateur pour laquelle le sommet du cône de focalisation dudit faisceau est situé dans le plan de la dite surface, cette distance étant appelée distance de consigne, en ce que l'on mesure la distance réelle entre la dite surface et le dit point de l'élément focalisateur, en ce que l'on détermine l'écart entre la dite distance de consigne et la distance réelle mesurée, et en ce que l'on déplace le dit élément focalisateur, de façon à annuler l'écart constaté entre la distance réelle mesurée et la dite distance de consigne.

2. Procédé suivant la revendication 1, caractérisé en ce que l'on mesure par voie électrique, électromagnétique ou optique la dite distance réelle, en ce que l'on produit un signal électrique représentatif de l'écart constaté entre cette distance réelle et la dite distance de consigne, et en ce que l'on applique ce signal électrique à un organe de commande du déplacement de l'élément focalisateur.

3. Procédé suivant l'une ou l'autre des revendications 1 et 2, caractérisé en ce que l'on détermine la variation de l'écart entre la dite distance réelle et la dite distance de consigne, en mesurant la variation d'une grandeur physique, en particulier électrique, électromagnétique ou optique, par rapport à une valeur de référence de la dite grandeur physique représentative d'un écart nul.

Liège, le 7 février 1983.

LACASSE L.E.,

0086540

Numéro de la demande

EP 83 20 0215

**Office européen des brevets**

# RAPPORT DE RECHERCHE EUROPEENNE

## DOCUMENTS CONSIDERES COMME PERTINENTS

| Categorie | Citation du document avec indication, en cas de besoin, des parties pertinentes | Revendication concernée | CLASSEMENT DE LA DEMANDE (Int. Cl. ³) |
|---|---|---|---|
| A | GB-A-1 073 503 (CENTRE NATIONAL DE LA RECHERCHE SCIENTIFIQUE) *Page 4, lignes 26-39* | 1-3 | B 23 K 26/04 |
| | --- | | |
| X | LU-A- 66 280 (GLAVERBEL) *Page 6* | 1-3 | |
| | --- | | |
| X | LU-A- 56 099 (COMPAGNIE INDUSTRIELLE DES LASERS) *Page 10* | 1-3 | |
| | ----- | | |

|  |  | DOMAINES TECHNIQUES RECHERCHES (Int. Cl. ³) |
|---|---|---|
|  |  | B 23 K 26/00 |

Le présent rapport de recherche a été établi pour toutes les revendications

| Lieu de la recherche LA HAYE | Date d'achèvement de la recherche 16-05-1983 | Examinateur HOORNAERT W. |
|---|---|---|

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

OEB Form 1503 03 82